# EUROPEAN PATENT APPLICATION

(11) **EP 4 321 683 A1**
(43) Date of publication of application: **14.02.2024**
(21) Application number: 22306200.1
(22) Date of filing: 09.08.2022
(51) Int. Cl.: D21H 19/34, D21H 27/10

(54) **BARRIER PAPER WITH HIGH OXYGEN BARRIER PROPERTIES**

(71) Applicant: Ahlstrom Oyj, 00100 Helsinki (FI)
(72) Inventor: PAQUET, Olivier, 38200 Jardin (FR); ROUX, Mireille, 69700 Givors (FR)
(74) Representative: Hoffmann Eitle

(57) **Abstract**

This invention relates to a barrier paper comprising a paper base material and a carboxymethyl cellulose coating layer formed on a surface of the paper base material, wherein the paper base material is a cellulosic paper and the carboxymethyl cellulose coating layer comprises 80 - 100% by weight of carboxymethyl cellulose, based on dry weight.

## Description

### Technical field

The present invention relates to a barrier paper that can be used as an oxygen barrier layer in packaging materials for oxygen sensitive items. Further aspects of the present invention include a method for producing the oxygen barrier paper and a use of the barrier paper as a packaging material for oxygen-sensitive foods.

### Background art

Packaging materials cause a large amount of waste, which many countries presently try to reduce by exchanging fuel based plastic packaging materials with fully biodegradable, compostable and bio-sourced packaging materials. Such biodegradable packing materials must fulfil various conditions depending on the end use. For example, when being used as food packaging, they must be safe for food contact, when being used as packaging for life science and diagnostic devices, they must meet stringent safety requirements. In particular, when used as packaging material for oxygen-sensitive products, sufficient gas barrier properties of the packaging material are required.

Cellulosic papers have been used as biodegradable base paper materials for producing sustainable packaging materials. One example of such a cellulosic paper is genuine vegetable parchment (GVP) made of 100% cellulose. GVP is known as biodegradable packaging material having moisture vapor barrier properties and intrinsic grease barrier properties.

In order to achieve the desired oxygen barrier properties, the cellulosic paper is either produced so as to have a very high density (such as GVP having a high level of parchmentization) or an additional oxygen barrier layer is laminated thereon.

EP 3 819 426 A1 describes parchment paper having a very high level of parchmentization.

However, when using a GVP having a very high parchmentization level, such as a PureBarrier^{™} material (oxygen barrier parchment material, produced by Ahlstrom Munksjö), there are some limitations concerning the mechanical properties. Even though such very highly parchmentized GVP grades are extremely interesting due to the fact that they have an intrinsic oxygen barrier property and they are completely bio-sourced (made of 100% cellulose) and certified to be home compostable, very highly parchmentized GVP grades are more brittle and fragile due to being highly transformed, which makes them relatively sensitive to folds and tear. This can be a limit to the use of highly parchmentized GVP grades for some packaging applications, especially those applications where the sheet needs to be formed into the desired shape to contain the food. They can also be somewhat difficult to handle in converting equipment running at higher web load.

Furthermore, very highly parchmentized GVP grades require very specific manufacturing process conditions to offer an oxygen transmission rate (OTR) value of below 5 cm³/m²/day. As a consequence, the productivity is quite low, and due to the low efficiency, their production is significantly more expensive than the production of standard GVP grades. The level of wastes in the production of highly parchmentized GVP grades can also be significantly higher than in the production of other GVP grades.

WO 2018/197676 A1 describes a multilayer article that comprises a vegetable parchment support and an oxygen barrier layer containing polyvinyl alcohol (PVOH) and US 2019/0078261 A1 describes a laminated body including an acid-resistant paper base material and a coating layer containing cellulose nanofibers, which is laminated thereon.

When coating an acid-resistant paper (such as a GVP) with an oxygen barrier coating such as PVOH, polyvinylidene chloride (PVdC) and others, the obtained OTR properties are not always satisfactory, either due to the sensitivity of the coating to the conditions of use (PVOH is sensitive to moisture), or because of environmental concerns (PVdC). When laminating an acid-resistant paper base material (e.g. a GVP) with an oxygen barrier layer such as a polymeric layer (e.g. polyolefin extrusion coatings or cellulose nanofiber coatings), barrier properties can be imparted but these methods involve an additional processing stage and have a negative impact on the life cycle of the products. The production of cellulose nanofiber coatings adds further costs to the production of a barrier paper coated therewith. Furthermore, the use of polyolefin lamination or lamination of other non-fully degradable coating materials has a very detrimental effect on the sustainability of the packaging material (lower bio-sourced content and no positive end of its life scenario).

Moreover, vapor phase deposition can also be used to cover a cellulosic base paper material. Even though metallization or other vapor phase processes allow to impart excellent barrier properties with very little raw material, these processes are quite expensive and are usually done with specific vacuum conditions, which require external converting steps. Moreover, if a paper substrate is used, it requires an additional coating step to improve the surface roughness before metallization. Indeed, without such additional coating the paper substrate can swell with moisture and the metal coating can crack and loose barrier properties. In addition to having a strong impact on packaging costs, the life cycle of these processes is still subject to discussions.

In summary, to obtain the desired oxygen barrier properties, specialized process conditions or the use of non-biodegradable material were required.

Therefore, it is an object of the present invention to provide an improved biodegradable packaging material having very good oxygen barrier properties and excellent mechanical properties. A further object of the present invention is the provision of a biodegradable packaging material that is easy to manufacture in an energy and waste-efficient way and at low costs.

Compared to a very highly parchmentized GVP grade, this invention has better mechanical properties and can be produced in a more efficient manner due to the cellulosic paper used as the paper base material having been a lower processing level (such as a lower parchmentization grade) and the carboxymethyl cellulose coating layer formed thereon. Compared to the existing multilayer products comprising a cellulosic base paper and an oxygen barrier coating, this invention offers a fully compostable material having better oxygen barrier properties due to the carboxymethyl cellulose coating layer comprises 80 - 100% by weight of carboxymethyl cellulose, based on dry weight.

### Summary of the invention

The present invention solves the problems of the prior art by the following means.

In a first aspect, the present invention relates to a barrier paper comprising a paper base material and a carboxymethyl cellulose coating layer formed on a surface of the base material, wherein the paper base material is a cellulosic paper and the carboxymethyl cellulose coating layer comprises 80 - 100% by weight of carboxymethyl cellulose, based on dry weight.

It has been found that applying a carboxymethyl cellulose coating layer comprising 80 - 100% by weight of carboxymethyl cellulose to a cellulosic paper solves the problems of the prior art by providing a biodegradable barrier paper having excellent oxygen barrier properties and simultaneously exhibiting favourable mechanical properties.

In a second aspect, the present invention relates to a method for producing a barrier paper comprising applying a coating mixture comprising 80 - 100% by weight of carboxymethyl cellulose, based on dry weight, onto a surface of a paper base material to form a carboxymethyl cellulose coating layer, wherein the paper base material is a cellulosic paper.

Thus, a further advantage of the present invention resides in the fact that the barrier paper as described herein can be prepared in a sustainable and more efficient manner and waste and production costs can be reduced compared to prior art procedures.

In a third aspect, the present invention relates to a use of the barrier paper described herein as a packaging material for oxygen-sensitive items.

### Detailed description of the invention

The present invention relates to a barrier paper comprising a paper base material and a carboxymethyl cellulose coating layer formed on a surface of the base material, wherein the paper base material is a cellulosic paper and the carboxymethyl cellulose coating layer comprises 80 - 100% by weight of carboxymethyl cellulose, based on dry weight.

In the context of the present invention, the following definitions and test methods apply.

The term "cellulosic paper" refers to a sheet-type material comprised substantially of cellulose. That is, the cellulose content in the cellulosic paper as described herein is usually at least 50% by weight, preferably at least 80% by weight and most preferably 100% by weight. Examples of the cellulosic paper are parchment paper, glassine paper, tracing paper, greaseproof paper and supercalendered paper.

The term "parchment paper" or "genuine vegetable parchment (GVP)" refers to a material comprised substantially of cellulose, which has been subjected to a parchmentizing process. Cellulose materials are derived from manmade sources such as regenerated cellulose fibers or films or from natural sources such as fibers or pulp from woody plants or non-woody plants. In the parchmentizing process, a cellulose paper sheet is treated with a gelatinizing agent comprising, for example, sulfuric acid under conditions where the reaction time between the gelatinizing agent and the cellulose is limited to control cellulose dissolution, hydrolysis and degradation. The treated paper is then washed thoroughly so as to remove the gelatinizing agent, after which it is dried. The bath chemical partially dissolves or gelatinizes the cellulose in the paper sheet. The dissolved cellulose is subsequently precipitated when the bath chemical is diluted by washing the treated paper. This process, called parchmenting or parchmentizing, forms a very tough, stiff, smooth paper with an appearance somewhat like that of a genuine parchment. Because paper treated in this manner has a tendency to become brittle and to wrinkle upon drying, it is sometimes treated with a plasticizing agent, for example glycerin, glucose or Sorbitol. Vulcanized fiber is a related product made by treating a cellulose paper sheet with a gelatinizing agent comprising, for example, zinc chloride.

The terms "glassine paper", "tracing paper", "greaseproof paper" and "supercalendered paper" refer to papers that are obtained mainly by combining two processes: refining and supercalendering. Glassine paper is typically produced by first producing a paper with refined cellulosic pulp and a series of moisturising and supercalendering steps so as to achieve a very dense paper with a smooth surface and a certain transparency. Greaseproof paper is typically produced by highly refining cellulosic pulp causing extensive fibrillation of the cellulose fibres and the formation of fines and subsequently using the highly refined pulp, which can optionally undergo a calendering step. Greaseproof paper in the context of the present invention should not be confused with greaseproof papers that are chemically treated for example using waxes and fluorochemicals. Tracing paper is a paper produced by highly refining cellulosic pulp and/or supercalendering the base paper. To enhance its translucency, the tracing paper can be treated with oils. Supercalendered paper is a paper that has been subjected to a supercalendering process. Supercalendered paper can be produced using moderately refined cellulosic pulp.

The term "high-density paper material" refers to a cellulosic paper having a high density of at least 800 kg/m³. The density of the cellulosic paper material can be calculated by dividing the grammage of the paper (g/m²) by its thickness (caliper) (µm). Typically, the grammage of a high-density paper material is in the range of between 25 and 200 g/m². The person skilled in the art can readily adjust the thickness parameter of the high-density paper depending on the selected basis weight so as to match the above-described density range.

The expression "biodegradable" is generally defined in line with the EN13432 standard. The expression "biodegradable" when applied to a material or a product means that the material, or the entire product, will both biodegrade and disintegrate. By "biodegrade" it is meant that the chemical structure or the material breaks down under the action of micro-organisms, while by "disintegrates" it is meant that the material, or the product made from it, will physically fall apart into fine visually indistinguishable fragments, at the end of a typical composting cycle.

The "oxygen transmission rate (OTR)" of a material refers to the volume of oxygen (cm³) that is transmitted through a specified area of the material (m²) during one day at atmospheric pressure of 1.013 bar (1 atm), a temperature of 23 °C and a relative humidity of 50%. The oxygen transmission rate (OTR) (cm³/m²/day) is measured in accordance with ASTM D 3985 and ASTM F 1927. Unless described otherwise, the OTR described herein is measured on an OX-TRAN 2/22 apparatus (supplier: MOCON), which complies with ASTM D3985. The OTR of a material is a measure for the oxygen barrier properties of the material and indicates the gas barrier level. In other words, the lower the OTR of a material, the smaller the amount of gas being transmitted through the material which results in the material offering a high barrier to gas, especially to oxygen.

As described above, the first aspect of the present invention relates to a barrier paper comprising a paper base material and a carboxymethyl cellulose coating layer formed on a surface of the base material, wherein the paper base material is a cellulosic paper and the carboxymethyl cellulose coating layer comprises 80 - 100% by weight of carboxymethyl cellulose, based on dry weight. The inventors have surprisingly found that the barrier paper is provided with high oxygen barrier properties and simultaneously with excellent mechanical properties when coating a cellulosic paper with a carboxymethyl cellulose (CMC) coating layer that is composed of at least 80% by weight CMC.

One important aspect of the present invention resides in the discovery that the formation of a CMC coating layer on a surface of a cellulosic paper base material serves to significantly improve the oxygen barrier properties thereof. When using a high-density paper material as the paper base material, a synergistic effect concerning the oxygen barrier properties between said base paper material and the CMC coating can be observed. That is, if the paper structure has a high density (closed enough), the CMC coating significantly increases OTR of the formed barrier paper. CMC is a cellulose derivative, with the addition of chemical side-groups (carboxymethyl) bearing electrostatic charges. These modifications allow a higher affinity of CMC with the cellulose of the high-density paper material than with other non-charged polymers. Thanks to this affinity, the covering of the cellulosic base paper material is good and the strength of cohesion between CMC and the cellulose of the base paper material is high. Even the formation of a thin CMC layer is already sufficient for achieving excellent oxygen barrier properties, when using a high-density paper material. The higher the density of the paper material, the smaller the thickness of the CMC coating required for obtaining a barrier paper having an excellent OTR.

A further key aspect of the present invention is the discovery that a cellulosic paper having insufficient oxygen barrier properties prior to being coated with the CMC coating layer can be suitably used as the base material of the barrier paper. Specifically, when using a cellulosic paper having very low oxygen barrier properties as the base material, excellent oxygen barrier properties can be obtained by coating this cellulosic paper with the CMC coating layer comprised of at least 80% by weight CMC.

The barrier paper described herein can therefore be advantageously used as barrier layer for the construction of highly gas and moisture impermeable packaging material, especially as packaging material for oxygen-sensitive items. Furthermore, as the barrier paper described herein has excellent mechanical properties with respect to tear strength, wet burst strength and dry burst strength, it can also be used as reinforcement layer for the construction of packaging material, particularly for packaging having a predetermined shape.

The present invention provides a fully biodegradable, compostable and bio-sourced product that substantially consists of cellulose and acts as an oxygen barrier layer as well as a reinforcing layer. Due to the fact that a cellulosic paper having a lower processing level can be used as the base paper, whereby energy required during the production process can be saved and waste produced during the production can be reduced, rendering the production process more efficient and less expensive. Another advantage of the present invention resides in the possibility of using recyclable cellulosic paper such as glassine paper, greaseproof paper or supercalendered paper as the base paper.

### Paper base material

The cellulosic paper used as the paper base material may be a high-density paper material having a density of 800 kg/m³ or more, preferably of 850 kg/m³ or more. When using such a high-density paper material, favourable oxygen barrier properties can already be obtained when applying a thinner CMC coating thereto.

The cellulosic paper preferably comprises at least 50% by weight and more preferably at least 80% by weight cellulose. It is most preferable that the cellulosic paper is composed of 100% by weight cellulose, rendering the cellulosic paper completely bio-sourced and fully biodegradable/compostable. The cellulosic paper therefore preferably contains no more than 5 wt.% of non-compostable material or material of undetermined compostability in order to meet the requirements of the EN 13432 standard. Most preferably, any additives added to the cellulosic paper are compostable.

The cellulosic paper is preferably selected from parchment paper, glassine paper, tracing paper, greaseproof paper and supercalendered paper. When using any of these cellulosic papers as the paper base material, it is possible to obtain a barrier paper simultaneously having excellent mechanical strength and excellent oxygen barrier properties, as well as a high flexibility due to selecting a low basis weight (e.g. 30 - 45 g/m²).

In a preferable embodiment, the cellulosic paper is parchment paper. The parchment paper may be a genuine vegetable parchment (GVP) substantially made of short fibres pulp. The parchment paper preferably has an OTR of less than 50,000 cm³/m²/day, preferably less than 10,000 cm³/m²/day, as measured at 23 °C and a relative humidity of 50%. When a parchment paper having an OTR of more than 50,000 cm³/m²/day is used as the base material, the resulting barrier paper may not have a sufficiently low OTR of 10 cm³/m²/day or less. The lower the OTR of the parchment paper, the higher its parchmentization level. For example, a parchment paper having an OTR of about 5000 - 100,000 cm³/m²/day has a low parchmentization level (e.g. Sulpack, manufactured by Ahlstrom Munksjö), a parchment paper having an OTR of about 150 - 3000 cm³/m²/day has a medium parchmentization level (e.g. Sulflex, manufactured by Ahlstrom Munksjö), and a parchment paper having an OTR of 10 cm³/m²/day or less has a very high parchmentization level (e.g. PureBarrier, manufactured by Ahlstrom Munksjö).

A very highly parchmentized paper (e.g. PureBarrier) can exhibit a favourable OTR value of less than 10 cm³/m²/day. However, when increasing the parchmentization level, the mechanical properties of the parchment paper are reduced, because a very high parchmentization level leads to the paper being more brittle and sensitive to cracking. By combining a parchment paper having a moderate parchmentization grade with a thin CMC coating layer, the reduction of the mechanical properties can be avoided and a barrier paper having significantly better mechanical properties (e.g. in terms of tear resistance) as well as having excellent oxygen barrier properties can be obtained.

The basis weight of the cellulosic paper to be used as the paper base material may be selected according to the fibre and/or filament constitution and the intended end use. In some embodiments, the basis weight of the cellulosic paper on a dry basis may be 200 g/m² or less, preferably from 30 to 130 g/m², more preferably from 45 to 85 g/m². Glassine paper, tracing paper, greaseproof paper and supercalendered paper are particularly useful for selecting a very low basis weight such as 30 - 45 g/m². When the basis weight of the cellulosic paper is within these ranges, the barrier paper obtained therewith has excellent mechanical properties and offers excellent barrier properties while maintaining a good level of flexibility suitable for flexible packaging or tray applications.

The cellulosic paper to be used as the paper base material typically has an average thickness of from 30 µm to 200 µm, preferably from 35 µm to 95 µm, even more preferably from 40 µm to 80 µm, from the viewpoint of achieving excellent mechanical reinforcement properties and good flexibility.

### Carboxymethyl cellulose coating layer

The CMC coating layer formed on a surface of the paper base material comprises 80 to 100% by weight CMC, based on dry weight. Whilst CMC is commonly known to be used as a thickener additive for coating compositions, the present inventors have surprisingly discovered CMC to be useful when being applied as a coating layer to a cellulosic paper resulting in high OTR properties. When applying a CMC coating having a high content of CMC (i.e. at least 80% by weight) a barrier paper having excellent oxygen barrier properties can be obtained. When the coating layer is made primarily or even entirely of CMC, very high OTR properties can be obtained. The reason therefor lies in a synergistic effect of the CMC contained in the CMC coating layer with the cellulosic paper material, which results in the obtained barrier paper having a lower OTR. The high affinity of CMC with the cellulose of the high-density paper material due to the carboxymethyl side groups in the CMC bearing electrostatic charges enables an excellent covering of the cellulosic base paper material and a high strength of cohesion between CMC and the cellulose of the base paper material. The formation of a continuous and dense CMC coating allows the formation of a good oxygen barrier.

This synergistic effect is especially pronounced when using a high-density paper material as the paper base material. The reason therefor is as follows. A high-density paper presents few or no cracks and pores, thus enabling the CMC coating to fill-up these cracks more effectively. Additionally, when using high-density paper having close to no porosity, the CMC is not adsorbed deeply into the material and instead forms a good surface coverage with low quantities thus resulting in a barrier paper having excellent OTR properties.

The CMC coating layer is preferably formed on the surface of the base material in an amount of 1.5 g/m² or more, more preferably in an amount of between 1.5 and 10 g/m². When applying at least 1.5 g/m² of the CMC coating, a barrier paper having excellent oxygen barrier properties (i.e. having a low OTR of < 10 cm³/m²/day) can be provided. The amount of the CMC coating to be applied to the surface of the paper base material is dependent on the density of the paper base material. For example, if a very dense cellulosic paper (e.g. a parchment paper having a high parchmentization grade) is used, a smaller amount of the CMC coating forming a thinner CMC coating layer on the surface of the dense cellulosic paper is already sufficient to obtain a barrier paper having an excellent OTR. On the other hand, if the cellulosic paper has a lower density, it is preferable to apply a higher amount of CMC coating to the surface thereof, thus forming a thicker CMC coating layer, from the viewpoint of obtaining a barrier paper having an excellent OTR.

The Mw of CMC can be adjusted both by raw material selection and the conditions of its manufacturing process. The CMC preferably has a Mw of between 100,000 and 750,000 g/mol, preferably between 100,000 and 400,000 g/mol.

The Mw of CMC has a critical effect on the coating composition. When the Mw is lower than 100,000 g/mol, the CMC has a lower viscosity, which makes the application thereof easier, but reduces the oxygen barrier properties of the resulting barrier paper. When the Mw is higher than 750,000 g/mol, the CMC has a higher viscosity, which causes problems with the application thereof to the surface of the base material whilst there is no gain on OTR properties. Consequently, using CMC having a Mw falling within the above-mentioned ranges is preferable from the viewpoint of selecting the best compromise between rheology and OTR properties.

The OTR properties of the barrier paper can be further enhanced by adding a softener such as glycerol and/or a salt such as calcium chloride, sodium chloride or potassium chloride to the CMC coating composition.

The addition of salts such as calcium chloride, sodium chloride and potassium chloride helps to lower the viscosity of the CMC coating composition by limiting the conformation of the CMC molecules in water, hence reducing the interactions between molecules which impacts the viscosity. Thus, the addition of salts enables the use of CMC having a higher Mw, which leads to further enhanced oxygen barrier properties of the obtained barrier paper.

The addition of glycerol on the other hand has a different effect. Firstly, the addition of glycerol having a lower viscosity than the diluted CMC tends to further dilute the composition and lower the viscosity. Secondly and more importantly, glycerol or other softeners act to soften the barrier layer, making it less stiff and brittle. Due to this effect, the coating is less likely to generate small defects during manufacturing or converting, resulting in a better and more reliable barrier effect.

The CMC coating composition preferably includes 20% by weight or less of glycerol, based on dry weight. More preferably, the composition includes between 5% and 18% by weight of glycerol. Even more preferably, the composition includes between 10% and 15% by weight of glycerol. When containing glycerol in such an amount, the OTR of the obtained barrier paper can be further reduced.

The CMC coating composition preferably includes salts such as calcium chloride, sodium chloride and/or potassium chloride. It is preferable that these salts are included in the CMC coating composition in an amount of 5% by weight or less relative to the CMC coating composition. When containing salts, preferably in said amount, the OTR of the obtained barrier paper can be further reduced.

### Barrier paper

The barrier paper according to the present invention comprises the cellulosic paper as a paper base material and a CMC coating layer comprising 80 - 100% by weight CMC formed on a surface of the paper base material. Due to the CMC coating layer comprising at least 80% by weight CMC applied to a surface of the cellulosic paper base material, a biodegradable barrier paper having excellent oxygen barrier properties and simultaneously exhibiting favourable mechanical properties is provided.

Due to the CMC coating layer applied thereto, the barrier paper preferably has an OTR of 0.10 and 100.0 cm³/m²/day, more preferably between 0.10 and 10.0 cm³/m²/day.

According to the construction of the barrier paper of the present invention, it is possible to obtain sufficient oxygen barrier properties, even when using a cellulosic paper having a lower processing level and concomitant low gas barrier properties as the paper base material.

The tear strength of the barrier paper described herein is dependent on the type of cellulosic paper used as the paper base material. The tear strength of the barrier paper is measured according to ISO 1974:2012.

The dry burst strength and the wet burst strength of the barrier paper described herein is dependent on the type of cellulosic paper used as the paper base material and the selected basis weight. The wet burst strength is measured according to ISO 3689 and the dry burst strength is measured according to ISO 2758.

### Method for producing barrier paper

In a second aspect, the present invention relates to a method for producing a barrier paper comprising applying a coating mixture comprising 80 - 100% by weight of carboxymethyl cellulose, based on dry weight, onto a surface of a paper base material to form a carboxymethyl cellulose coating layer, wherein the paper base material is a cellulosic paper.

The cellulosic paper that is used as the paper base material is preferably a high-density paper material having a density of 800 kg/m³ or more, preferably of 850 kg/m³ or more. When using a high-density paper material, it is possible to apply a thin CMC coating layer thereto and still obtain favourable oxygen barrier properties. Furthermore, by applying only a thin CMC coating layer, application problems occurring with CMC coating compositions having a higher viscosity can be reduced. Hence, when using a high-density paper material, the production of the barrier paper is easier and more cost efficient.

The CMC coating layer (including optional additives such as glycerol and/or salts such as calcium chloride, sodium chloride and/or potassium chloride) and amount thereof as previously described herein can be used in the method for producing the barrier paper according to the present invention.

The step of applying the CMC coating layer onto the surface of the cellulosic paper base material does not require pressure to be applied and can be conducted using no pressure or by applying a pressure of for example 300 to 2000 kPa. Any kind of coating method can be used, e.g. curtain coating, rod coating or gravure coating. When applying no pressure, the CMC coating can be applied for example by using a spray coater. When applying pressure, the CMC coating can be applied for example by using a size press process or a pressure-impregnation process. By applying the CMC coating layer using pressure, the OTR properties of the obtained barrier layer can be further enhanced. When using a size-press, it is preferable to apply a CMC coating CMC having a higher viscosity so as to achieve a sufficient grammage/desired basis weight.

A subsequent calendering step can also be optionally included. Calendering can help homogenize the thickness and increase the density of the barrier paper, thus improving the oxygen barrier properties. Optionally, a calendering step can also be carried out before the coating step to improve surface properties of the base material.

### Packaging material

In a third aspect, the present invention relates to the use of the barrier paper described herein as a packaging material for oxygen sensitive products.

The packaging material is not particularly limited and the barrier paper can be used as packaging material for preserving oxygen sensitive items, for example, oxygen sensitive food or oxygen sensitive life science and diagnostic devices. The packaging material for oxygen sensitive food may for example be selected from the group consisting of butter wrapping, beverage container, coffee capsule, coffee pad, chocolate packaging and biscuit packaging. Preferably, the packaging material is used in the construction of a coffee capsule, more preferably a lid of a coffee capsule. The packaging material for oxygen sensitive life science and diagnostic devices may for example be selected from the group consisting of test kits packaging, biospecimen collection and preservation cards packaging, laboratory test filters packaging, test pads packaging and DNA/RNA extraction medias packaging.

The barrier paper can be used together with optional additional layers in the packaging material. That is, the packaging material may be a multi-layer product comprising the barrier paper as a first material layer and at least one additional material layer, wherein the at least one additional material layer is laminated on a surface of the barrier paper. The additional layer is not particularly limited and may be appropriately selected dependent on the desired additional property, with which the packaging material should be supplemented. The additional layer is preferably selected from the group consisting of a water vapor barrier layer, an aroma barrier layer, a water-resistant layer, a thermo-sealable layer, a grease-resistant layer, finishing varnish layer and a printable layer.

### Examples

The properties of the cellulosic papers used in the present examples and the barrier papers prepared in the present examples have been measured according to the following methods.

The oxygen transmission rate (OTR) has been measured in accordance with ASTM D 3985 on an OTR measurement apparatus "OX-TRAN 2/22" (produced by MOCON).

The following raw materials have been used in the present examples.

### Paper base material:

The paper base materials used in the present examples and comparative examples are shown in Table 1.

**Table 1**

| | **Cristal 401 37g** | **Sulpack 60L** | **Sulflex 50** | **Highly parchmentized paper** |
|---|---|---|---|---|
| Type | Super-calendered paper | GVP, 100% cellulose | GVP, 100% cellulose | GVP, 100% cellulose |
| OTR (cm³/m²/day) | >5000 | >5000 | 116 | 68 |
| Basis weight (g/m²) | 37 | 60 | 50 | 75 |
| Thickness (µm) | 28.2 | 63.5 | 58.9 | 82.2 |
| Density (kg/m³) | 1301 | 935 | 851 | 912 |

### CMC coating layer:

For preparing the CMC coating layer, the following CMC grades have been used:
- "CMC FinnFix 150" (produced by Nouryon), which is a carboxymethyl cellulose having a Mw of around 120,000 g/mol
- "CMC FinnFix 300" (produced by Nouryon), which is a carboxymethyl cellulose having a Mw of around 180,000 g/mol
- "CMC FinnFix 700" (produced by Nouryon), which is a carboxymethyl cellulose having a Mw of around 270,000 g/mol
- "CMC FinnFix BBP H15S" (produced by Nouryon), which is a carboxymethyl cellulose blend with varied Mw

Aqueous compositions containing the different carboxymethyl cellulose grades in different amounts were prepared so as to obtain a coating of around 2 g/m².

### Example 1: Evaluation of type of CMC coating

For Examples 1.1 to 1.4 and Comparative Example 1.1, the oxygen barrier properties of a parchment paper having a low parchmentization grade (Sulpack 60L), which is either uncoated or coated by applying different types of CMC coating layers comprising 100% by weight carboxymethyl cellulose in two layers to a surface thereof using a hand coater (no pressure), have been evaluated as shown in Table 2. For Example 1.5, the oxygen barrier properties of a supercalendered paper (Cristal^{™} 401 37g) coated by applying CMC Finnfix 300 in two layers to a surface thereof using a hand coater, have been evaluated as also shown in Table 2.

**Table 2**

| | **Type of coating** | **Coating amount (g/m²)** | **OTR (cm³/m²/day)** |
|---|---|---|---|
| **Comparative Example 1.1** | - | - | >5000 |
| **Example 1.1** | CMC FinnFix 150 | 2.4 = 1.2 + 1.2 | 5.95 |
| **Example 1.2** | CMC FinnFix 300 | 2.5 = 1.2 + 1.3 | 4.83 |
| **Example 1.3** | CMC FinnFix 700 | 1.9 = 1.0 + 0.9 | 6.68 |
| **Example 1.4** | CMC FinnFix BBP H15S | 2.4 = 1.2 + 1.2 | 3.12 |
| **Example 1.5** | CMC FinnFix 300 | 1.9 = 1.0 + 0.9 | 14.88 |

When using no CMC coating layer, it was not possible to obtain sufficient oxygen barrier properties (cf. Comparative Example 1.1). When using a CMC coating having a lower Mw, a sufficient OTR can be obtained (cf. Example 1.1). When using a CMC coating having a moderate Mw, it was possible to further reduce the OTR (cf. Example 1.2). When using a CMC coating having a high Mw, it was possible to apply a thinner coating layer and also obtain a sufficient OTR (cf. Example 1.3). When using a CMC blend coating, it was also possible to obtain an excellent OTR (cf. Example 1.4). The oxygen barrier properties of a supercalendered paper (Example 1.5) can also be improved using a CMC coating.

### Example 2: Addition of softener to the CMC coating layer

The oxygen barrier properties of a parchment paper having a low parchmentization grade (Sulpack 60L), which is either uncoated or coated by applying a CMC coating layer using "CMC FinnFix 300" and optionally a softener to a surface thereof using a hand coater (no pressure), have been evaluated as shown in Table 3.

**Table 3**

| | **Composition of coating layer (% by weight)** | **Coating amount (g/m²)** | **OTR (cm³/m²/day)** |
|---|---|---|---|
| **Comparative Example 2.1** | - | - | >5000 |
| **Example 2.1** | 100% CMC | 2.5 | 4.83 |
| **Example 2.2** | 85% CMC 15% glycerol | 2.7 | 2.85 |

When using no CMC coating layer, it was not possible to obtain acceptable oxygen barrier properties (cf. Comparative Example 2.1). When using a CMC coating comprising 100% CMC, an excellent OTR can be obtained (cf. Example 2.1). When using a CMC coating additionally containing glycerol, it was possible to apply a coating layer more efficiently and the OTR could be further reduced (cf. Example 2.2).

## Claims

1. A barrier paper comprising:
a paper base material; and
a carboxymethyl cellulose coating layer formed on a surface of the paper base material,
wherein
the paper base material is a cellulosic paper, and
the carboxymethyl cellulose coating layer comprises 80 - 100% by weight of carboxymethyl cellulose, based on dry weight.

2. The barrier paper according to claim 1, wherein the paper base material is a high-density paper material having a density of 800 kg/m³ or more, preferably of 850 kg/m³ or more.

3. The barrier paper according to claim 1 or 2, wherein the carboxymethyl cellulose coating layer is formed on the surface of the base material in an amount of 1.5 g/m² or more, preferably between 1.5 and 10 g/m².

4. The barrier paper according to any one of claims 1 to 3, wherein the cellulosic paper base material is selected from parchment paper, glassine paper, tracing paper, greaseproof paper and supercalendered paper.

5. The barrier paper according to any one of claims 1 to 4, wherein the carboxymethyl cellulose coating layer further comprises glycerol in an amount of 20% by weight or less, based on dry weight.

6. The barrier paper according to any one of claims 1 to 5, wherein the carboxymethyl cellulose coating layer further comprises salts such as calcium chloride, sodium chloride and potassium chloride.

7. The barrier paper according to any one of claims 1 to 6, wherein the carboxymethyl cellulose has a molecular weight of between 100,000 and 750,000 g/mol, preferably between 100,000 and 400,000 g/mol.

8. The barrier paper according to any one of claims 1 to 7, wherein the barrier paper has an oxygen transmission rate of between 0.10 and 100.0 cm³/m²/day, as measured at 23 °C and a relative humidity of 50%.

9. A method for producing a barrier paper, the method comprising:
applying a coating mixture comprising 80 - 100% by weight of carboxymethyl cellulose, based on dry weight, onto a surface of a paper base material to form a carboxymethyl cellulose coating layer,
wherein
the paper base material is a cellulosic paper.

10. The method according to claim 9, wherein the paper base material is a high-density paper material having a density of 800 kg/m³ or more, preferably of 850 kg/m³ or more.

11. The method according to claim 9 or 10, wherein the coating mixture is applied onto the surface of the paper base material in an amount of 1.5 g/m² or more, preferably between 1.5 and 10 g/m².

12. The method according to any one of claims 9 to 11, wherein the coating mixture further comprises 0 - 15% by weight of glycerol and 0 - 5% by weight of calcium chloride, based on dry weight.

13. A use of the barrier paper as defined in any one of claims 1 to 8 as a packaging material for oxygen-sensitive items such as foods, life science and diagnostic devices.
